# EUROPEAN PATENT APPLICATION

(11) **EP 1 970 738 A1**
(43) Date of publication of application: **17.09.2008**
(21) Application number: 08001743.7
(22) Date of filing: 30.01.2008
(51) Int. Cl.: G02B 7/02, H04N 5/225

(54) **Lens device**

(30) Priority: 14.03.2007 JP 2007065901
(71) Applicant: Fujinon Corporation, Saitama-shi, Saitama (JP)
(72) Inventor: Ozaki, Takao, Saitama-shi Saitama (JP); Nagata, Koichi, Saitama-shi Saitama (JP); Horio, Motohiko, Saitama-shi Saitama (JP)
(74) Representative: Klunker . Schmitt-Nilson . Hirsch

(57) **Abstract**

A lens device is provided and includes: at least two lenses (18A,18B); and a lens frame (34) holding the at least two lenses. The lens frame includes a first lens frame (34A) holding one of the at least two lenses and a second lens frame (34B) holding another of the at least two lenses, and the first lens frame and the second lens frame are attached in a line contact (A) in circumferential directions thereof. The first lens frame and the second lens frame are bonded after an optical adjustment of the at least two lenses by relatively swinging the first lens framed and the second lens frame with respect to the line contact.

## Description

### BACKGROUND OF THE INVENTION

### 1. Field of the Invention

The present invention relates to a lens device, and more particularly to a lens device including a lens frame holding at least two lenses so that optical adjustment can be carried out by swinging one of the two lenses relative to the other thereof.

### 2. Description of Related Art

There is known an optical adjustment structure disclosed in JP-A-10-319292, as an optical adjustment structure for a plurality of lens groups arranged within a lens barrel of a lens device.

Meanwhile, JP-A-2002-350702 discloses an optical adjustment structure in which axial alignment and positional adjustment are possible to carry out for the lenses of a lens frame holding two lenses.

In the optical adjustment structure of JP-A-2002-350702, the lens frame is divided as a first lens frame holding a first lens and a second lens frame holding a second lens so that optical adjustment can be carried out by relatively moving the first and second lens frames. Specifically, a projection is formed in the rear of a first lens frame so that the projection can be abutted against any of a plurality of step faces, i.e. an adjustment form, provided in a step-like form in a manner circumferentially continuing with a second lens frame. Due to this, the first and second lenses are adjusted in spacing thereof into the optically best adjusted state. Thereafter, in the state that the projection is abutted against one of the step faces, the first lens frame is axially aligned into a direction orthogonal to the optical axis, and then the first lens frame and the second lens frame in the optically best adjusted state are bonded with an adhesive.

However, the optical adjustment structure of JP-A-2002-350702 is in a complicated structure in which the projection is formed in the first lens frame and the step-like adjustment form is formed in the second lens frame. In addition, two types of adjustments, i.e. spacing adjustment and axial alignment are required in its optical adjustment, which are troublesomeness adjustments.

### SUMMARY OF THE INVENTION

An object of an illustrative, non-limiting embodiment of the invention is to provide a lens device including a lens frame holding at least two lenses so that optical adjustment of the at least two lenses can be carried out by a simple operation with a simple structure.

According to an aspect of the invention, there is provided a lens device including a lens frame holding at least two lenses, in which the lens frame is divided with a first lens frame holding one of at least two lenses and a second lens frame holding another of the at least two lenses, the first and second lens frames being attached in a line contact in circumferential directions thereof and bonded together after an optical adjustment of the one and the other lenses by relatively swinging the first lens frame and the second lens frame with respect to the line contact.

According to an aspect of the invention, the lens frame is divided with a first lens frame holding one of the at least two lenses and a second lens frame holding another of the at least two lenses. The first and second lens frames are placed in a line contact in circumferential directions thereof so as to be capable for relatively swinging the lens frames with respect to the line contact. The line contact can be configured by forming any one of abutment faces of the lens frames in a taper form. By performing optical adjustment through relatively swinging the first and second lens frames (optical adjustment performed by confirming a spot image with a collimator), the first and second lens frames are bonded together in the best position (in a position the spot image is seen clearly). This makes it possible to carry out optical adjustment of the lenses, in a lens frame holding at least two lenses, in a simple structure of line contact and by a simple operation of swing.

In the lens device, the lens device may be a four-grouped lens device having first, second, third and fourth lens groups, the first lens group being a front lens, the second lens group being a variator lens moving in the imaging optical axis, the third lens group being a vibration-proof lens and the fourth lens group being focus lenses held in the lens frame.

The lens device is one of exemplary lens devices of the present invention, in which a four-grouped structure is applied. The lens device is structured by arranging a first lens group as a front lens, a second lens group as a variator lens moving in the imaging optical axis, a third lens group as a vibration-proof lens and a fourth lens group as focus lenses held in the lens frame, in the order of from the front toward the rear on the optical axis thereof. In such a lens device of a four-grouped lens structure, the optical axis of the focus lens forms a requirement having a great effect upon the optical characteristics of the lens device. Therefore, high optical characteristics can be obtained by the lens device including focus lenses whose optical axis is aligned by the optical adjustment structure in an aspect of the invention.

### BRIEF DESCRIPTION OF THE DRAWINGS

The features of the invention will appear more fully upon consideration of the exemplary embodiment of the invention, which are schematically set forth in the drawings, in which:
Fig. 1 is a sectional view showing a lens device according to an exemplary embodiment of the invention;
Fig. 2 is a perspective view of a casing furnished with a vibration-proof lens of the lens device shown in Fig. 1, as viewed from the rear on the imaging optical axis;
Fig. 3 is a perspective view of the casing shown in Fig. 2 removed of an actuator;
Fig. 4 is a perspective view of a lens frame holding a focus lens of the lens device shown in Fig. 1;
Fig. 5 is a sectional view of the lens frame shown in Fig. 4;
Fig. 6 is a sectional view of a lens frame that optical adjustment is enabled by rounding the lens at one peripheral edge thereof; and
Fig. 7 is a sectional view of a lens frame that optical adjustment is enabled by rounding the lens at the other peripheral edge thereof,
wherein some of reference numerals in the drawings are set forth below.

10: Lens device; 11: lens barrel body; 12: first lens group; 14: second lens group; 16: third lens group; 18: fourth lens group; 18A and 18B: lenses; 20: color separation prism; 22, 24 and 26: imaging devices; 28 and 30 guide bars; 32, 34 and 50: lens frames; 34A: first lens frame; 34B: second lens frame; 62 and 92: plate-like motor coils; and 72 and 102: magnets.

### DETAILED DESCRIPTION OF THE EXEMPLARY EMBODIMENTS

Although the invention will be described below with reference to exemplary embodiments thereof, the following exemplary embodiments and modifications do not restrict the invention.

According to an exemplary embodiment of the invention, a lens frame is divided with a first lens frame holding one of at least two lenses and a second lens frame holding another of the at least two lenses. The first and second lens frames are placed in a line contact in circumferential directions thereof so as to be capable relatively swinging the lens frames with respect to the line contact. By performing optical adjustment by relatively swinging the first and second lens frames, the first and second lens frames can be bonded together in the best position. Therefore, at least two lenses can be optically adjusted with a simple structure and by a simple operation, in lens frames holding the at least two lenses.

In accordance with the appended drawings, explanation will be now made on lens devices according to exemplary embodiments of the present invention.

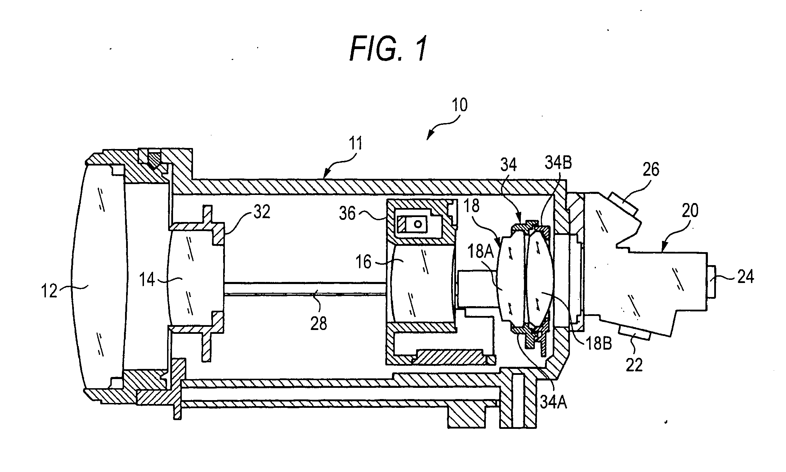

Fig. 1 shows a side sectional view of a lens device according to an exemplary embodiment of the present invention. The lens device 10 includes a first lens group 12, a second lens group 14, a third lens group 16 and a fourth lens group 18, in the order from the front (closer to a subject) to the rear (closer to an image) with respect to the imaging optical axis thereof. The subjective light, passed through the first to fourth lens groups 12 to 18, is focused, through a color separation prism 20 constituting a color-separation optical system, on imaging devices 22, 24, 26 provided at the R, G and B exit ends of the color separation prism 20. Incidentally, a camera body (not shown), to which the lens device 10 is attached, mounts thereon a signal processing circuit, etc. (not shown) that performs required processing (white balance, γ-correction, etc.) on the image signal obtained from the imaging devices 22, 24, 26 and produces a video signal in a form.

The first lens group 12 is so-called a front lens and the second lens group 14 is a variator lens for changing the focal length. The third lens group 16 is a vibration-proof lens to be driven in a direction canceling the vibrations as caused by unintentional movement or so, and the fourth lens group 18 is a focus lens for focal adjustment.

The first to fourth lens groups 12 to 18 are held within a lens barrel body 11. Within the lens barrel body 11, a pair of guide bars 28, 30 (see Fig. 1) are arranged extending in parallel with the optical axis. The guide bar 30 (not shown in Fig. 1) is arranged apart from the guide bar 28 and arranged on an opposite side to the guide bar 28 with respect to the optical axis. On the guide bars 28, 30, there are slidably supported a lens frame 32 of the second lens group 14 and a lens frame 34 of the fourth lens group 18. Furthermore, a casing 36 of the third lens group 16 is fixed on the guide bars 28, 30. The casing 36 may be fixed directly on the lens barrel body 11.

The second lens group 14 is provided with a nut (not shown) structuring a screw feed device. To the nut, screw-coupled is a feed screw (not shown) structuring a screw feed device similarly. The feed screw is arranged in parallel with the optical axis, having an end coupled to the output shaft of a stepping motor (not shown) for zooming. The zooming stepping motor has a zoom driver circuit (not shown) so that when a zoom signal is outputted thereto from the camera body, the zooming stepping motor rotates the feed screw in a direction corresponding to the relevant signal. Due to this, the second lens group 14 is moved back and forth in the optical-axis direction along the guide bars 28, 30, thus being adjusted at a desired focal length.

The fourth lens group 18 is similarly provided with a nut (not shown) structuring a screw feed device. To the nut, screwed is a feed screw (not shown) structuring a screw feed device similarly. The feed screw is arranged in parallel with the optical axis, having an end coupled to the output shaft of a focusing stepping motor (not shown). The focusing stepping motor has a focus driver circuit (not shown) so that, when a focus signal is outputted thereto from the camera body, the focusing stepping motor rotates the feed screw in a direction corresponding to the relevant signal. Due to this, the fourth lens group 18 is moved back and forth in the optical-axis direction along the guide bars 28, 30, thus effecting focal adjustment.

The structure of the vibration-proof mechanism will be explained.

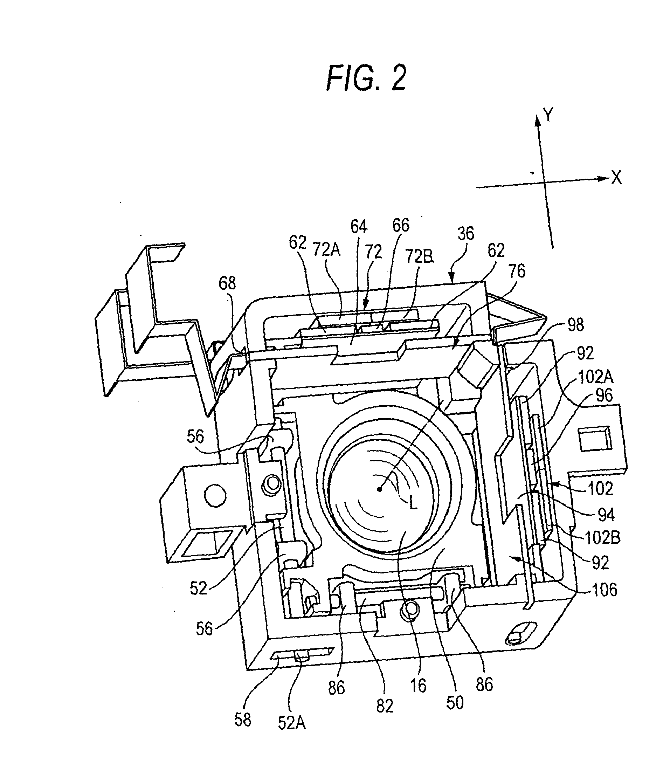

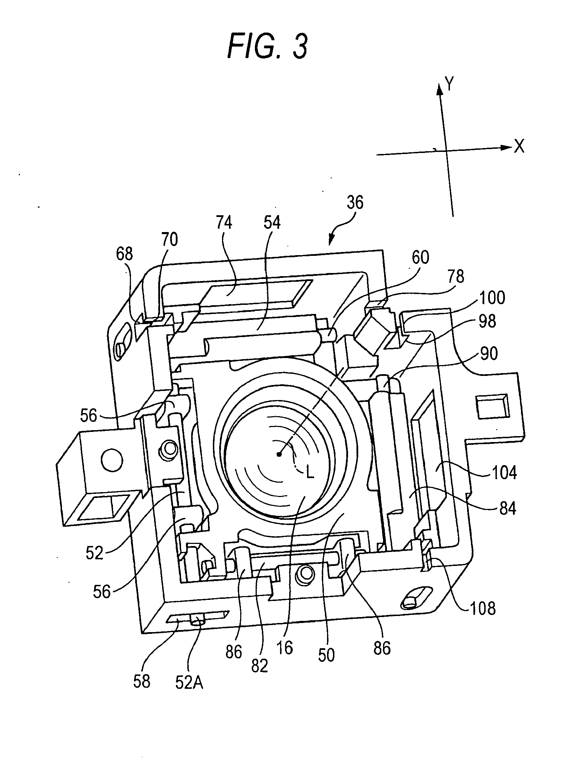

Fig. 2 is a perspective view of the casing 36 furnished with a vibration-proof lens 16 as viewed from the rear while Fig. 3 is a perspective view of the casing 36 shown in Fig. 2 removed of an actuator.

As shown in those figures, the third lens group (referred herein to as a vibration-proof lens for convenience sake) 16 is held in a lens frame 50. The lens frame 50 is supported to move in different two directions on a plane orthogonal to the imaging optical axis L. From now on, the moving directions of the vibration-proof lens 16 are taken as X (horizontal in Figs. 2 and 3) and Y (vertical in Figs. 2 and 3) directions. The mechanism for moving the vibration-proof lens 16 in the X direction is referred to as an X-moving mechanism while the mechanism for moving it in the Y direction is referred to as a Y-moving mechanism.

First, the X-moving mechanism will be explained.

A lens frame 50 is fixed with a moving guide bar 52. The moving guide bar 52 is arranged in the Y direction so that a slider 54 can be engaged with the moving guide bar 52. The slider 54 is formed in an L-form having upper and left side portions. On the left side portion, there are formed two guides 56, 56 protruding in the optical-axis. The guides 56 are respectively formed with guide holes (not shown) in the Y direction so that the moving guide bars 52 are passed through the guide holes. Due to this, the slider 54 is engaged over the movable guide bar 52 in a manner to slide in the Y direction. Accordingly, the lens frame 50 is supported to slide in the Y direction by means of the slider 54. The lens frame 50 is restricted from moving in the X direction so that, when the slider 54 is moved in the X direction, the lens frame 50 is also moved in the X direction.

Incidentally, the moving guide bar 52 has a lower end 52A, in the figure, in engagement with an elongate hole 58 formed in the X direction in the casing 36. This prevents the lens frame 50 from inclining (inclining relative to the optical axis).

A guide hole (not shown) is formed in the X direction in the upper side portion of the slider 54, so that a fixed guide bar 60 is passed through the guide hole. The fixed guide bar 60 is arranged in the X direction, the both ends of which are fixed to the casing 36. Due to this, the slider 54 is supported for sliding in the X direction along the fixed guide bar 60. Sliding the slider 54 in the X direction causes the lens frame 50, engaged with the left side portion of the slider 54 through moving guide bar 52, to slide in the X direction.

Meanwhile, a plate-like motor coil (product name: "Fine Pattern Coil" (Registered Trademark)) 62 is fixed on the upper side portion thereof. The motor coil 62 is bonded, at its underside, an output end of a flexible printed board 64. The motor coil 62 is arranged in the X direction, in a position around the outer periphery of the vibration-proof lens 16. The flexible printed board 64 is secured with a position sensor 66, such as a Hall element, through alignment.

The flexible printed board 64 is extended in the X direction from the motor coil 62 to the outside of the casing 36 through a side opening 68 of the casing 36. The flexible printed board 64, extended to the outside, is bent toward the outer. After a V-formed (or U-formed) bent portion is formed, it is extended from a predetermined position of the lens barrel body 11 (see Fig. 1) to the outside of the lens barrel body 11. The lead-out flexible printed board 64 is connected to a unit that takes control of supplying power and operating the vibration-proof lens 16. Incidentally, the side opening 68 of the casing 36 is in communication with the end surface of the casing 36 through a slit 70. By passing the flexible printed board 64 through the slit 70, the flexible printed board 64 is arranged to the inside of the side opening 68.

On the outer side of the motor coil 62, a magnet 72 is arranged opposed to the motor coil 62. The magnet 72 is formed in a rectangular plate form and arranged such that the S and N poles 72A, 72B are arranged in the X direction. The foregoing position sensor 66 is arranged opposite to the boundary of the S and N poles 72A, 72B of the magnet 72, to detect a change of magnet field. The detected signal is outputted to the unit through the flexible printed board 64.

A metal plate (not shown), to serve as a yoke, is provided on the outer side of the magnet 72. The metal plate is to be attracted toward the magnet 72 through the action of the magnetic force of the magnet 72. The metal plate is formed in a rectangular form greater than the magnet 72, and attached in the state that the edge thereof protrudes from the magnet 72. The casing 36 has an outer surface formed with a recess in a size equal to the metal plate, on the inner side of which is formed an opening 74 in a size equal to the magnet 72. The metal plate is received in the recess of the casing 36 while the magnet 72 is received in the opening 74.

On the inner side of the motor coil 62, a metal plate 76, to serve as a yoke, is arranged in the X direction and oppositely to the motor coil 62. The metal plate 76 has one end inserted in the slit 70 and the other end inserted in the groove 78 formed in the casing 36, thereby being fixed in the casing 36.

The X-moving mechanism, constructed as above, is arranged with the motor coil 62 in the magnetic field formed by the magnet 72 and two metal plates (one omitted in showing) 76. By energizing the motor coil 62, the motor coil 62 and the supporting slider 54 undergo a force in the X direction. Accordingly, the slider 54 and the lens frame 50 are moved in the X direction, thus moving the vibration-proof lens 16 in the X direction. The description made so far is on the vibration-proof mechanism.

Explanation will be made on the Y-moving mechanism.

The lens frame 50 is fixed with a moving guide bar 82. The moving guide bar 82 is arranged in the X direction so that a slider 84 can be engaged with the moving guide bar 82. The slider 84 is formed in an L-form having upper and left side portions. On the left side portion, there are formed two guides 86, 86 protruding in the optical-axis direction. The guides 86 are respectively formed with guide holes (not shown) in the X direction so that the movable guide bars 82 are passed through the guide holes. Due to this, the slider 84 is engaged over the movable guide bar 82 in a manner to slide in the X direction. Accordingly, the lens frame 50 is supported for sliding in the X direction by means of the slider 84. The lens frame 50 is restricted from moving in the Y direction so that, when the slider 54 is moved in the Y direction, the lens frame 50 is also moved in the Y direction.

A guide hole (not shown) is formed in the Y direction in the right side portion of the slider 84, so that a fixed guide bar 90 is passed through the guide hole. The fixed guide bar 90 is arranged in the Y direction, the both ends of which are fixed to the casing 36. Due to this, the slider 84 is supported for sliding in the Y direction along the fixed guide bar 90. Sliding the slider 84 in the Y direction causes the lens frame 50, engaged with the lower side portion of the slider 54 through moving guide bar 52, to slide in the X direction.

Meanwhile, a plate-like motor coil (product name: "Fine Pattern Coil" (Registered Trademark)) 92 is fixed on the right side portion of the slider 54. The motor coil 92 is bonded, at its left surface, an output end of a flexible printed board (hereinafter, referred to as "flexible printed board") 94. The motor coil 92 is arranged in the Y direction, in a position around the outer periphery of the vibration-proof lens 16. The flexible printed board 94 is secured with a position sensor 96, such as a Hall element, through alignment.

The flexible printed board 94 is extended in the Y direction from the motor coil 92 to the outside of the casing 36 through a side opening 98 of the casing 36. The flexible printed board 64, extended to the outside, is bent toward the outer. After a V-formed (or U-formed) bent portion is formed, it is extended from a predetermined position of the lens barrel body 11 (see Fig. 1) to the outside of the lens barrel body 11. The lead-out flexible printed board 94 is connected to the unit that takes control of supplying power and operating the vibration-proof lens 16. Incidentally, the side opening 98 of the casing 36 is in communication with the end surface of the casing 36 through a slit 100. By passing the flexible printed board 94 through the slit 100, the flexible printed board 94 is arranged to the inside of the side opening 98.

On the outer side of the motor coil 92, a magnet 102 is arranged opposed to the motor coil 92. The magnet 102 is formed in a rectangular plate form and arranged such that the S and N poles 102A, 102B are arranged in the Y direction. The foregoing position sensor 96 is arranged opposite to the boundary of the S and N poles 102A, 102B of the magnet 102, to detect a change of magnet field. The detected signal is outputted to the unit through the flexible printed board 94.

A metal plate (not shown), to serve as a yoke, is provided on the outer side of the magnet 102. The metal plate is to be attracted toward the magnet 102 through the action of the magnetic force of the magnet 102. The metal plate is formed in a rectangular form greater than the magnet 102, and attached in the state that the edge thereof protrudes from the magnet 72. The casing 36 has an outer surface formed with a recess in a size equal to the metal plate, on the inner side of which is formed an opening 104 in a size equal to the magnet 102. The metal plate is received in the recess of the casing 36 while the magnet 102 is received in the opening 104.

On the inner side of the motor coil 92, a metal plate 106, to serve as a yoke, is arranged in the Y direction and oppositely to the motor coil 92. The metal plate 106 has one end inserted in the slit 100 and the other end inserted in the groove 108 formed in the casing 36, thereby being fixed in the casing 36.

The Y-moving mechanism, constructed as above, is arranged with the motor coil 92 in the magnetic field formed by the magnet 102 and two metal plates (one omitted in showing) 106. By energizing the motor coil 92, the motor coil 92 and the supporting slider 84 undergo a force in the Y direction. Accordingly, the slider 84 and the lens frame 50 are moved in the Y direction, thus moving the vibration-proof lens 16 in the Y direction. The description made so far is on the vibration-proof mechanism.

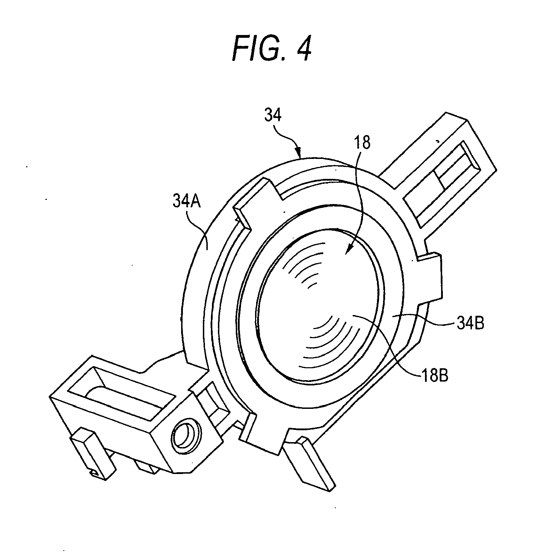

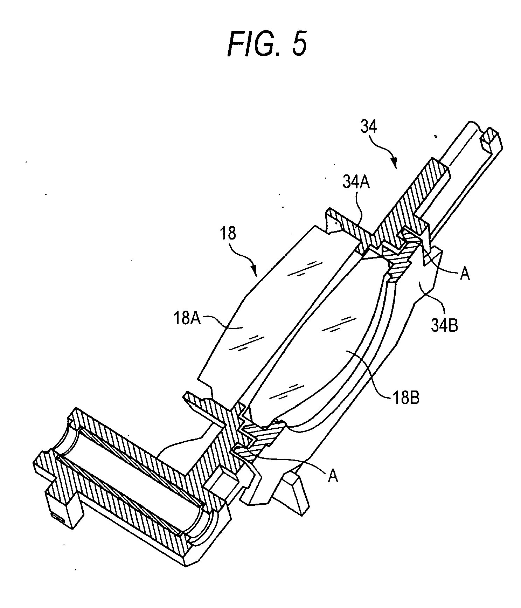

Fig. 4 is a perspective view of the fourth lens group (referred herein to as a focus lens, for convenience sake) 18 and its lens frame 34 as viewed from the rear on the imaging optical axis L while Fig. 5 is a sectional view of the lens frame 34.

As shown in Fig. 5, the focus lens 18 is structured with two lenses 18A, 18B that are held in the lens frame 34. The lens frame 34 is divided with a first lens frame 34A holding a front-positioned lens 18A and a second lens frame 34B holding a rear-positioned lens 18B. The first and second lens frames 34A, 34B are circumferentially line-contacted at the abutment region A thereof, thus being attached so as to be capable for relatively swinging. The line contact structure can be configured by forming any one of the abutment faces in a taper form and the other of the abutment faces in a horn-like form. In the embodiment, tapering is provided for the abutment face of the second frame 34B, and the abutment face of the first lens frame 34A is horn-shaped.

Explaining the way of optically adjusting the focus lens 18 structured as above, optical adjustment is to be carried out by fixing the first lens frame 34A to a collimator device and swinging the second lens frame 34B being placed in line contact with the first lens frame 34A. Namely, the second lens frame 34B is swung while confirming the spot image on the collimator device. Then, the first and second lens frames 34A, 34B are bonded together by an adhesive in a best position where the spot image can be seen clearly. It is satisfactory to pour adhesive to the line contact region between the first lens frame 34A and the second lens frame 34B.

This makes it possible to carry out optical adjustment on one and the other lenses 18A, 18B of the lens frame 34 holding the two lenses 18A, 18B, in a simple structure of line contact and with a simple operation of swing.

Although the focus lens 18 of Fig. 5 is structured with two lenses 18A, 18B, it may be structured with three or more lenses. Namely, two or more lenses may be held by the first or second lens frame 34A, 34B.

Meanwhile, in the lens device 10 structured with four lens groups in the embodiment, the focus lens 18 arranged rear on the imaging optical axis' L has an optical axis giving a requirement having a great effect upon the optical characteristics of the lens device 10. Therefore, optical characteristics are obtainable high according to the lens device in a four-group lens structure having the focus lens 18 aligned in optical axis by virtue of the foregoing optical adjustment structure.

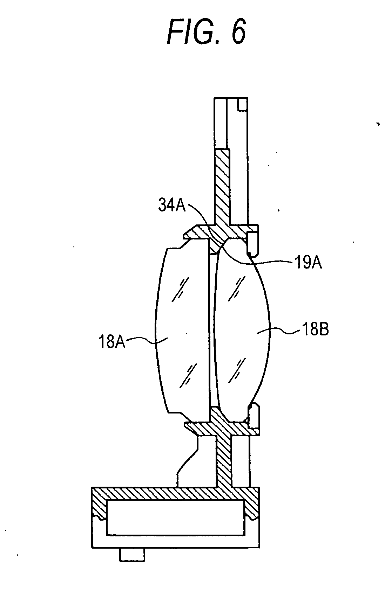

Fig. 6 shows a sectional view of a lens frame 34 that the lens 18B can be optically adjusted without dividing the lens frame 34. This example is structured by rounding the lens 18B at its peripheral edge 19A closer to the subject so that the peripheral edge 19A can be swingably abutted against an inner peripheral edge 34A of the lens frame 34. By swinging the lens 18B along the inner peripheral edge 34A, the lens 18B can be optically adjusted relative to the lens 18A. After the optical adjustment, the lens 18B is bonded to the lens frame 34 through adhesive.

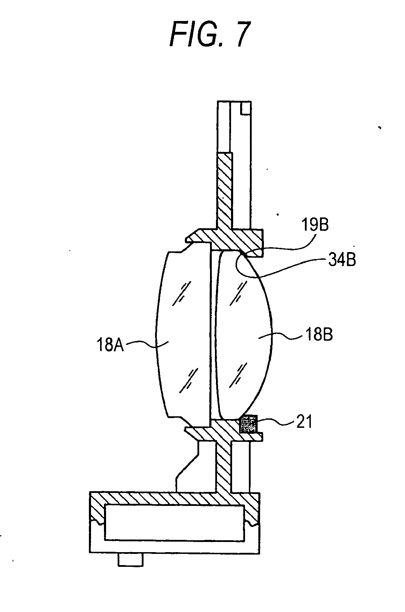

Fig. 7 shows a sectional view of a lens frame 34 that the lens 18B can be optically adjusted without dividing the lens frame 34, similarly to Fig. 6. This example is structured by rounding the lens 18B at its peripheral edge 19B closer to the image so that the peripheral edge 19B can be swingably abutted against an outer peripheral edge 34B of the lens frame 34. By swinging the lens 18B along the outer peripheral edge 34B, the lens 18B can be optically adjusted relative to the lens 18A. After the optical adjustment, the lens 18B is bonded to the lens frame 34 through adhesive.

This application claims foreign priority from Japanese Patent Application No. 2007-65901 filed March 14, 2007, the contents of which is herein incorporated by reference.

## Claims

1. A lens device comprising:
at least two lenses; and
a lens frame holding the at least two lenses, wherein the lens frame includes a first lens frame holding one of the at least two lenses and a second lens frame holding another of the at least two lenses, and the first lens frame and the second lens frame are attached in a line contact in circumferential directions thereof,
wherein the first lens frame and the second lens frame are bonded after an optical adjustment of the at. least two lenses by relatively swinging the first lens framed and the second lens frame with respect to the line contact.

2. The lens device according to claim 1, wherein one of the first lens frame and the second lens frame has an taper-shaped abutment face and the other of the first lens frame and the second lens frame has a horn-shaped abutment face so that the taper-shaped abutment face and the horn-shaped abutment face make the line contact of the first lens frame and the second lens frame.

3. The lens device according to claim 1, which is a four-grouped lens device including a first lens group, a second lens group, a third lens group, and a fourth lens group,
the first lens group being a front lens, the second lens group being a variator lens moving in an imaging optical axis thereof, the third lens group being a vibration-proof lens, and the fourth lens group including the at least two lenses held in the lens frame, the at least two lenses being focus lenses.
